# EUROPÄISCHE PATENTSCHRIFT

(11) **EP 3 413 405 B1**
(45) Veröffentlichungstag und Bekanntmachung des Hinweises auf die Patenterteilung: **13.03.2019**
(21) Anmeldenummer: 17174879.1
(22) Anmeldetag: 08.06.2017
(51) Int. Cl.: H01R 13/627, F16L 37/098

(54) **VERBINDER**
CONNECTOR
CONNECTEUR

(43) Veröffentlichungstag der Anmeldung: 12.12.2018
(73) Patentinhaber: Rosenberger Hochfrequenztechnik GmbH & Co. KG, 83413 Fridolfing (DE)
(72) Erfinder: Gruber, Andreas, 83410 Laufen (DE); Dandl, Christian, 83413 Fridolfing (DE)

(56) Entgegenhaltungen:
- EP-A1- 2 565 990
- EP-A1- 2 770 587
- EP-A1- 2 978 079
- US-A1- 2006 105 628
- US-A1- 2007 275 590
- US-A1- 2012 319 401
- US-A1- 2017 018 875

## Beschreibung

### GEBIET DER ERFINDUNG

Die vorliegende Erfindung betrifft Verbinder zum Verbinden zweier Leitungen, zum Beispiel Steckverbinder, Schraubverbinder oder dergleichen. Die Erfindung betrifft sowohl elektrische Verbinder als auch rein mechanische Verbinder, beispielsweise Fluidverbinder.

### TECHNISCHER HINTERGRUND

Die DE 4439852 A1 zeigt einen Verriegelungsmechanismus für einen HF-Steckverbinder. Das Prinzip dieses Standes der Technik ist gemäß EP 2 142 951 B1 auch auf optische Steckverbinder anwendbar.

Die US 2017/0018875 A1 zeigt Verbinder, insbesondere Steckverbinder, zum lösbaren Verbinden zweier Leitungen entlang einer Verbinderachse mit einer Leitung, einem Verbindungsmechanismus, welcher eine Hülse und ein Schleppelement aufweist, und ein Halteelement zum Halten eines zu verbindenden Gegenverbinders, wobei das Schleppelement und die Hülse jeweils zwischen einer ersten Position und einer zweiten Position entlang der Verbinderachse verschiebbar sind und die Hülse eingerichtet ist, das Schleppelement mittels einer axialen Verschiebung der Hülse zwischen der ersten und der zweiten Position zu verschieben, um den Verbinder mit einem Gegenverbinder zu verbinden bzw. zu lösen.

Die US 2006/0105628 A1 zeigt einen koaxialen Steckverbinder.

Dementsprechend sind Verriegelungsmechanismen zum Verbinden eines Verbinders mit einem Gegenverbinder bekannt. Nachteilig an derartigen Verriegelungsmechanismen ist, dass Verbinder aufgrund des Verriegelungsmechanismus häufig nur mit einem bestimmten Gegenverbinder kompatibel sind. Zudem lässt sich die Haltekraft einer Verbindung zwischen einem Verbinder und einem Gegenverbinder nicht individuell einstellen, sondern ist von der Auslegung des Verriegelungsmechanismus abhängig.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, ein individuell zu handhabendes Verbindungssystem anzugeben.
Erfindungsgemäß wird diese Aufgabe durch einen Verbinder mit den Merkmalen des Patentanspruchs 1 gelöst.

Die der vorliegenden Erfindung zugrunde liegende Idee besteht darin, eine Toleranzausgleichsmöglichkeit eines Verbinders mittels einer variierbaren Länge eines Betätigungsweges eines Verbindungsmechanismus bereitzustellen. Diesbezüglich unterscheidet die Erfindung zwischen dem Betätigungsweg der Hülse und dem Betätigungsweg des Schleppelements.

Dadurch ist es möglich eine Ausgleichsmöglichkeit für besonders große Toleranzen zu schaffen. Durch die Verbesserung des Toleranzausgleichs kann der Ausschuss in der Verbinderfertigung verringert werden bzw. die Kompatibilität eines Verbinders verbessert werden.

Die vorliegende Erfindung sieht vor, dass die Länge des Betätigungsweges der Hülse umso länger ist, umso geringer der Außendurchmesser eines zu verbindenden Gegenverbinders ist.

Erfindungsgemäß weist die Hülse und das Schleppelement ein Rastmittel auf, derart dass die Hülse mit dem Schleppelement zwischen der ersten und der zweiten Position verrastet ist und die Verrastung in der zweiten Position entrastet ist.

Auf diese Weise ist gewährleistet, dass sich das Schleppelement mit der Hülse mit bewegt, wenn die Hülse mit dem Schleppelement verrastet ist. Somit reicht es, wenn ein Benutzer oder eine Maschine die Hülse betätigt, anstatt die Hülse und das Schleppelement zu betätigen.

Erfindungsgemäß ist die Feder als Federkorb mit Federlaschen ausgebildet. Auf diese Weise ist die aufzubringende Kraft zum Verbinden des Verbinders mit einem Gegenverbinder möglichst gering, da ein Federkorb mit Federlaschen radial leicht verformbar ist und dennoch eine ausreichende Haltekraft gewährleistet.

Erfindungsgemäß sind die Federlaschen des Federkorbs in radialer Richtung derart gekrümmt, dass die Federlaschen das Schleppelement an einem äußeren Bereich der Federlaschen berühren und einen Gegenverbinder in einem mittigen Bereich der Federlaschen berühren.

Auf diese Weise kann die Lebensdauer des erfindungsgemäßen Verbinders bzw. Gegenverbinders verlängert werden, da die Kanten der Federlaschen nicht auf dem Gegenverbinder schleifen, sondern der Gegenverbinder von einer mittigen Auflagefläche der Federlaschen gehalten wird.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Besonders vorteilhaft ist es, wenn der Betätigungsweg des Schleppelements durch eine Kraft, mit der die Hülse auf das Schleppelement einwirkt, bestimmt ist, d.h. der Betätigungsweg erstreckt sich von einer Ausgangsposition der Hülse bis zu einer Position, an der die Hülse eine bestimmte radiale Kraft auf das Schleppelement überträgt. An dem Punkt an dem diese Kraft überschritten wird, endet der Betätigungsweg und es kann vorgesehen sein, dass die Hülse bis zu einem bestimmten Punkt weiter verschoben wird, ohne das Schleppelement zu betätigen.

Gemäß einer bevorzugten Ausführungsform der Erfindung sind die Leitungen als elektrische Leitungen, insbesondere als Kabel, oder als Rohrleitungen, insbesondere als Fluidleitungen, ausgebildet. Das Prinzip der Erfindung ist für sämtliche zum Anmeldetag gängigen Arten von Verbindern anwendbar, insbesondere für elektrische Steckverbinder, zum Beispiel koaxiale Steckverbinder, HV-Steckverbinder, optische Steckverbinder, für Fluidverbinder, beispielsweise an Hydranten oder Gartenschläuchen.

Gemäß einer bevorzugten Ausführungsform der Erfindung sind die Hülse, das Halteelement und/oder das Schleppelement aus elektrisch leitendem Material gefertigt. Dies ist insbesondere für elektrische Steckverbinder vorteilhaft, da auf diese Weise die elektromagnetische Schirmung verbessert werden kann.

Insbesondere kann es zweckmäßig sein, die geometrische Form des Verbindungsmechanismus, also die Hülse, das Schleppelement und/oder das Halteelement abhängig von der Frequenz eines zu übertragenden Signals anzupassen.

Gemäß einer bevorzugten Ausführungsform der Erfindung ist die Hülse zwischen der ersten Position, der zweiten Position und einer dritten Position beweglich, wobei sich die zweite Position zwischen der ersten Position und der dritten Position befindet und die zweite Position eine Endposition für das Schleppelement bildet. Dementsprechend ist das Schleppelement nicht über die zweite Position hinaus, also nicht zwischen der zweiten und der dritten Position, verschiebbar.

Somit ist es möglich, die zweite Position in Abhängigkeit einer Kraft, die von der Hülse auf das Schleppelement aufgebracht wird, zu definieren, wobei der Betätigungsweg der Hülse zwischen der ersten und dritten Position konstant bleibt.

Dies ist besonders vorteilhaft, wenn der Verbindungsmechanismus nicht manuell bedient wird, sondern von einer Maschine, einem Roboter oder von einer Steuerung.

Auf diese Weise ist die aufzubringende Kraft zum Verbinden eines Verbinders mit einem Gegenverbinder konstruktiv fein einstellbar.

Dementsprechend kann vorgesehen sein, dass die Verbindung zwischen dem Verbinder und einem Gegenverbinder bereits vollständig hergestellt ist, wenn sich das Schleppelement in der zweiten Position befindet.

Sofern der Verbinder nicht manuell, sondern von einer Maschine betätigt wird, ist es wünschenswert, dass die Länge des Betätigungsweges der Hülse unabhängig von der Kraft zum Verbinden ist und insbesondere für jeden Verbindungszyklus gleich ist. Dies kann dadurch erreicht werden, indem der Betätigungsweg der Hülse derart ausgelegt ist, dass er in jedem Fall länger ist als der kraftabhängige Betätigungsweg des Schleppelements.

Dementsprechend kann eine Maschine bzw. ein Benutzer die Hülse zwischen der zweiten und der dritten Position bewegen, obwohl die Verbindung durch den Verbindungsmechanismus bereits hergestellt ist. Auf diese Weise kann der Verbindungsvorgang vereinfacht werden, da keine Erkennung für das Erreichen der zweiten Position erforderlich ist, sondern lediglich sichergestellt sein muss, dass die zweite Position erreicht wurde, wenn sich die Hülse in ihrer dritten Position befindet.

Dies reduziert auch bei menschlichen Bedienern die Fehlerquote von fehlerhaften Verbindungen.

Gemäß einer bevorzugten Ausführungsform der Erfindung ist die Kraft, mit der das Schleppelement an der Hülse verrastet ist, über die Position eines Rastmittels der Hülse einstellbar. Beispielsweise kann in der Hülse eine Rastnut ausgebildet sein, die von einer verschiebbaren Kante begrenzt ist. Durch eine Verschiebung der Kante lässt sich die Geometrie der Rastnut einstellen, was sich wiederum auf die Kraft, mit der das Schleppelement an der Hülse verrastet ist, auswirkt.

Gemäß einer bevorzugten Ausführungsform der Erfindung bestimmt sich die zweite Position, in der die Verrastung zwischen dem Schleppelement und der Hülse entrastet ist, in Abhängigkeit von einer Kraft, die von der Hülse auf das Schleppelement übertragen wird. Auf diese Weise wird die Rastverbindung zwischen der Hülse und dem Schleppelement gelöst, sobald eine Kraft, die von der Hülse auf das Schleppelement übertragen wird, einen bestimmten Schwellwert übersteigt.

Sofern vorgesehen ist, dass der Betätigungsweg der Hülse länger ist als der Betätigungsweg des Schleppelements, muss ein Benutzer beim Betätigen des Verbindungsmechanismus kurzzeitig eine höhere Kraft aufwenden, um die Verrastung zwischen der Hülse und dem Schleppelement zu lösen. Dies gibt dem Benutzer eine haptische Rückmeldung über den Verbindungsvorgang.

Gemäß einer bevorzugten Ausführungsform der Erfindung ist das Halteelement als Feder, welche in radialer Richtung verformbar ist, ausgebildet.

Insbesondere kann vorgesehen sein, Kontaktflächen der Hülse, des Schleppelements oder des Halteelements zu der Hülse, dem Schleppelement bzw. dem Halteelement schräg auszubilden, um die aufzubringende Kraft zum Verbinden einzustellen.

Gemäß einer bevorzugten Ausführungsform der Erfindung ist der Verbindungsmechanismus eingerichtet, den Verbinder mit einem Gegenverbinder zu verklemmen und/oder zu verrasten. Versuche haben gezeigt, dass eine ausreichende Haltekraft bereits durch Verklemmen gewährleistet ist.

Gemäß einer bevorzugten Ausführungsform der Erfindung weist die Feder ein Rastmittel auf, welches eingerichtet ist, mit dem Gegenverbinder zu verrasten. Somit wird die Haltekraft der Verbindung zwischen dem Verbinder und dem Gegenverbinder weiter gesteigert.

Gemäß einer bevorzugten Ausführungsform der Erfindung ist das Rastmittel als hakenförmige Ausnehmung der Federlasche ausgebildet. Dieses Rastmittel gewährleistet eine einfache aber zugleich sichere Verrastung.

Gemäß einer bevorzugten Ausführungsform der Erfindung weiten sich die Federlaschen in einem interfaceseitigen Bereich radial auf. Auf diese Weise ist eine Zentrierhilfe zum Zentrieren des Gegenverbinders in dem Verbinder gewährleistet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: zeigt eine schematische Schnittsicht eines elektrischen Verbinders gemäß einer Ausführungsform der Erfindung;
- Fig. 2: zeigt eine schematische Schnittsicht eines erfindungsgemäßen Verbindungsmechanismus gemäß einer Ausführungsform der Erfindung;
- Fig. 3: zeigt einen Ausschnitt gemäß Figur 2;
- Fig. 4: zeigt einen erfindungsgemäßen Verbinder gemäß einer Ausführungsform der Erfindung in einer ersten Position;
- Fig. 5: zeigt einen erfindungsgemäßen Verbinder gemäß einer Ausführungsform der Erfindung in einer zweiten Position;
- Fig. 6: zeigt einen erfindungsgemäßen Verbinder gemäß einer Ausführungsform der Erfindung in einer dritten Position;
- Fig. 7: zeigt eine Detailansicht eines Schleppelements gemäß einer Ausführungsform der Erfindung;
- Fig. 8: zeigt eine Detailansicht eines Federkorbs gemäß einer Ausführungsform der Erfindung;
- Fig. 9: zeigt eine Detailansicht einer Federlasche gemäß einer Ausführungsform der Erfindung;

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

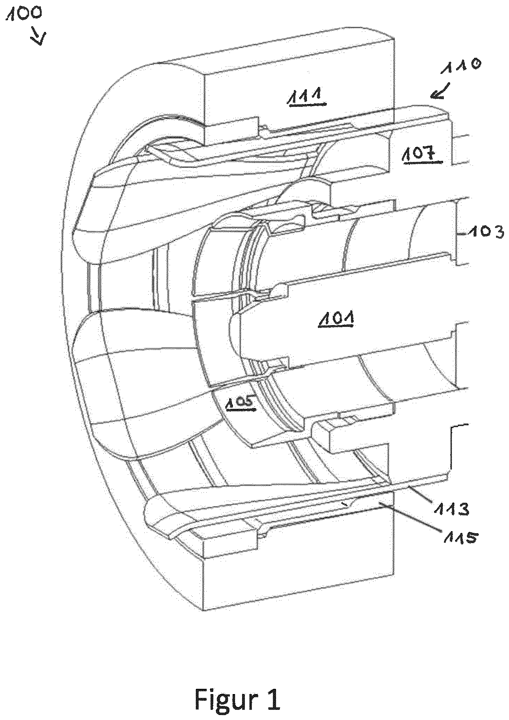

Figur 1 zeigt eine schematische Schnittsicht eines erfindungsgemäßen Verbinders 100, der als koaxialer Steckverbinder ausgebildet ist. Der Verbinder 100 weist einen Innenleiter 101, ein Isolierteil 103 und einen Außenleiter 105 auf. Das Isolierteil 103 beabstandet den Außenleiter 105 gegenüber dem Innenleiter 101. Der Außenleiter 105 weist mehrere Federlaschen auf und bildet in einem interfaceseitigen Bereich eine Stufe bzw. einen Durchmessersprung.

Die elektrische Anordnung mit dem Innenleiter 101, dem Isolierteil 103 und dem Außenleiter 105 ist in einem Gehäuse 107 angeordnet. An dem Gehäuse 107 ist der Verbindungsmechanismus 110 befestigt. Alternativ kann vorgesehen sein, dass der Verbindungsmechanismus 110 als Teil eines Gehäuses integriert ist.

Der Verbindungsmechanismus 110 umfasst eine Hülse 111, ein Schleppelement 115 und einen Federkorb 113. Die Hülse 111 umgibt das Schleppelement 115. Das Schleppelement 115 umgibt den Federkorb 113. Die Hülse 111 ist mit dem Schleppelement 115 derart verbunden, dass das Schleppelement 115 über eine Bewegung der Hülse 111 entlang der Längsachse verschiebbar ist.

Aufgrund einer nach innen gerichteten Kontur des Schleppelements 115 bzw. einer nach außen gerichteten Vorspannung des Federkorbs 113 werden der Federkorb 113 und das Schleppelement 115 leicht gegeneinander gedrückt.

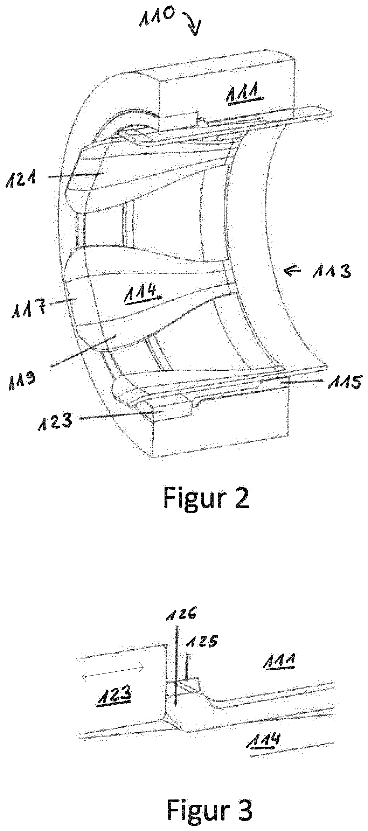

Figur 2 zeigt eine perspektivische Schnittsicht des Verbindungsmechanismus 110 gemäß Figur 1. Der Federkorb 113 umfasst mehrere Federlaschen 114 mit einer gebogenen Kontur. Die Federlaschen 114 umfassen einen interfaceseitigen vorderen Bereich 117, in dem sich die Federlaschen nach außen öffnen. Auf diese Weise ist ein trichterförmiger Fangbereich gebildet, der das Verbinden bzw. Verstecken eines Verbinders mit einem Gegenverbinder erleichtert. Ferner umfassen die Federlaschen 114 einen mittigen Bereich 121 und einen seitlichen Bereich 119.

Der seitliche Bereich 119 ist in radialer Richtung derart gekrümmt, dass die Seitenkanten der Federlaschen 114 nicht auf dem Schleppelement 115 schleifen, sondern einen zu den Federkorb 113 innen liegenden Verbinder bzw. Gegenverbinder berühren bzw. halten, wenn sich der Verbindungsmechanismus 110 in entsprechender Position befindet. Der mittige Bereich 121 der Federlaschen 114 ist in radialer Richtung derart gewölbt, dass der mittige Bereich 121 das Schleppelement 115 berührt bzw. gegebenenfalls elektrisch kontaktiert, wenn der Verriegelungsmechanismus 110 Teil eines elektrischen Pfades ist.

Figur 3 zeigt einen Ausschnitt als Detailansicht gemäß Figur 2. Die Hülse 111 ist 2-teilig ausgebildet und umfasst einen Grundkörper und einen Ring 123. Der Ring 123 bildet zusammen mit dem Grundkörper der Hülse 111 eine Nut 125, die eingerichtet ist, mit einer Rastnase 126 des Schleppelements 115 zu verrasten. Indem der Ring 123 in einem Montageschritt in die Hülse 111 eingesetzt wird, kann die Nut 125 hinsichtlich ihrer Kontur und Materialwahl anwendungsspezifisch konfiguriert werden.

Wie in Figur 3 angedeutet ist, kann der Ring 123 verschiebbar ausgebildet sein. Beispielsweise kann ein Gewinde zwischen dem Ring 123 und dem Grundkörper der Hülse vorgesehen sein, um die Position des Ringes 123 einzustellen. Es versteht sich, dass auch andere Einstellmöglichkeiten als Gewinde, beispielsweise durch magnetische Materialien, denkbar sind. Somit lässt sich die Breite der Nut 126 einstellen. Bei einer entsprechend ausgelegten Geometrie der Rastnase 126 lässt sich somit die Kraft einstellen, mit der die Rastnase 126 in der Rastnut 125 rastet.

Alternativ kann die Hülse 111 auch einteilig mit einem ringförmigen Einschnitt für eine Nut ausgebildet sein. Auf diese Weise lässt sich die Herstellung gegenüber einer zweiteiligen Hülse vereinfachen.

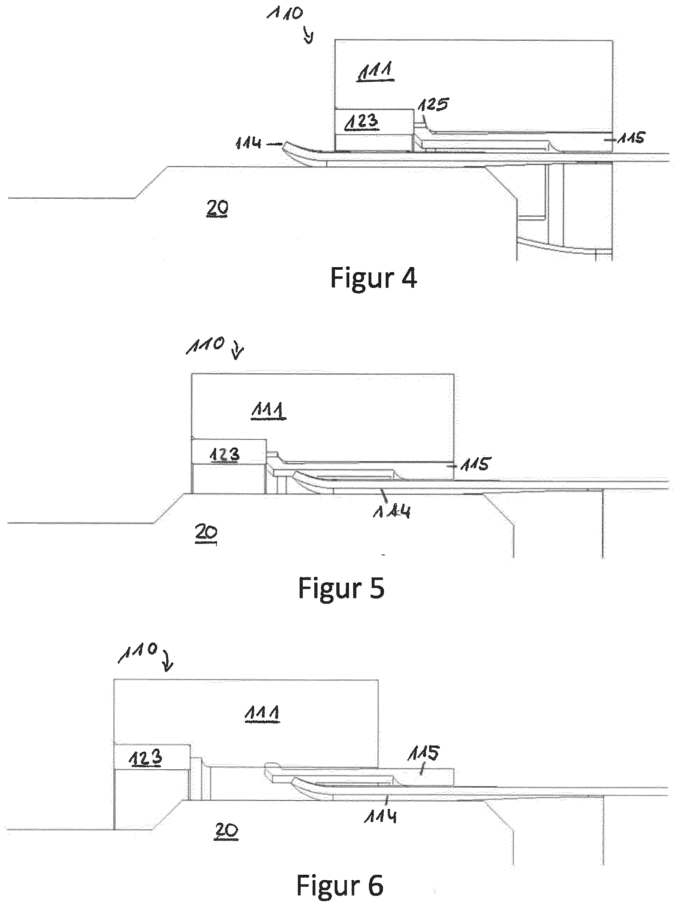

Die Figuren 4-5 zeigen den erfindungsgemäßen Verbindungsmechanismus 110 in einer ersten Position (Figur 4), in einer zweiten Position (Figur 5) und in einer dritten Position (Figur 6).

Figur 4 zeigt den Verbindungsmechanismus 110 in einer Ausgangsposition, in der der Verbindungsmechanismus nicht betätigt ist. In der Ausgangsposition ist die Hülse 111 mit dem Schleppelement 115 verrastet, indem sich das Schleppelement 115 in der Nut 125 befindet. Die hinteren Enden der Hülse 111 und des Schleppelements 105 schließen in der Ausgangsposition bündig zueinander ab. Innenliegend zu dem Schleppelement 115 ist der Federkorb 113 mit den Federlaschen 114 angeordnet. Ein hinterer stufenförmiger Bereich des Schleppelements 115 berührt einen hinteren Bereich der Federlaschen 114. Die Federlaschen 114 sind leicht nach außen vorgespannt, ohne das Schleppelement 115 im weiteren Verlauf in Richtung des Interface zu berühren. Das Schleppelement 115 ist leicht in radialer Richtung nach innen vorgespannt, sodass zwischen der Hülse 111 und dem Schleppelement 115 ein kleiner Spalt entsteht.

Ein Gegenverbinder 20 ist in den Federkorb 113 eingeführt und wird von den Seitenkanten der Federlaschen 114 berührt.

Figur 5 zeigt den Verbindungsmechanismus 110 in einer mittleren Position nach dessen Betätigung. In Figur 5 wurde gegenüber Figur 4 die Hülse 111 von einem Benutzer oder einer Maschine nach vorne gezogen. Aufgrund der Verbindung zwischen der Hülse 111 und des Schleppelements 115 durch die Nut 125 wurde das Schleppelement 115 von der axialen Bewegung der Hülse nach vorne mitgenommen bzw. mitgeschleppt. Aufgrund der Vorspannung der Federlaschen 114 nach außen werden diese von dem ringförmigen Bereich des Schleppelements 115 nach innen gedrückt, um die Haltekraft der Federlaschen 114 an dem Gegenverbinder 20 zu steigern.

In der Ausführungsform gemäß den Figuren 4-6 ist vorgesehen, dass die vollständige Verbindungskraft bereits in der zweiten Position gemäß Figur 5 erreicht ist. Alternative Ausführungsformen, in der sich die Verbindungskraft nach der zweiten Position gemäß Figur 6 weiter steigert, sind ebenso realisierbar.

Figur 6 zeigt eine Endposition des Verbindungsmechanismus 110. Das Schleppelement 105 hat sich gegenüber Figur 5 nicht weiter in Richtung des Interfaces bewegt. Diesbezüglich kann ein oberer Kraftschwellwert festgelegt sein, bei welchem das Schleppelement nicht weiter verschoben werden kann. Alternativ kann eine feste Position, welche von dem Schleppelement nicht überschritten werden kann, festgelegt sein.

Die Hülse 111 wurde gegenüber Figur 5 weiter nach vorne verschoben, sodass das Schleppelement 115 nicht länger über die Nut 125 mit der Hülse 111 verrastet ist. Um die Rastnase 126 aus der Nut 125 herauszuheben, muss von einem Benutzer kurzzeitig mehr Kraft aufgebracht werden. Dieser zusätzliche Kraftaufwand signalisiert dem Benutzer, dass das Schleppelement 115 von der Hülse 111 nicht länger mitgeschleppt wird.

In der Position gemäß Figur 6 besteht zwischen der Hülse 111 und dem Schleppelement 115 eine höhere Kontaktkraft, da die Rastnase 126 direkt auf den Grundkörper der Hülse drückt.

In den Figuren 4-6 ist keine zusätzliche Verriegelung vorgesehen, da die Verklemmung zwischen der Hülse 111, dem Schleppelement 115, den Federlaschen 114 und dem Gegenverbinder 20 bereits eine ausreichende Haltekraft gewährleistet.

Sofern jedoch aufgrund einer spezifischen Anwendung eine Verriegelung erforderlich ist, lässt sich diese ohne weiteres ergänzen.

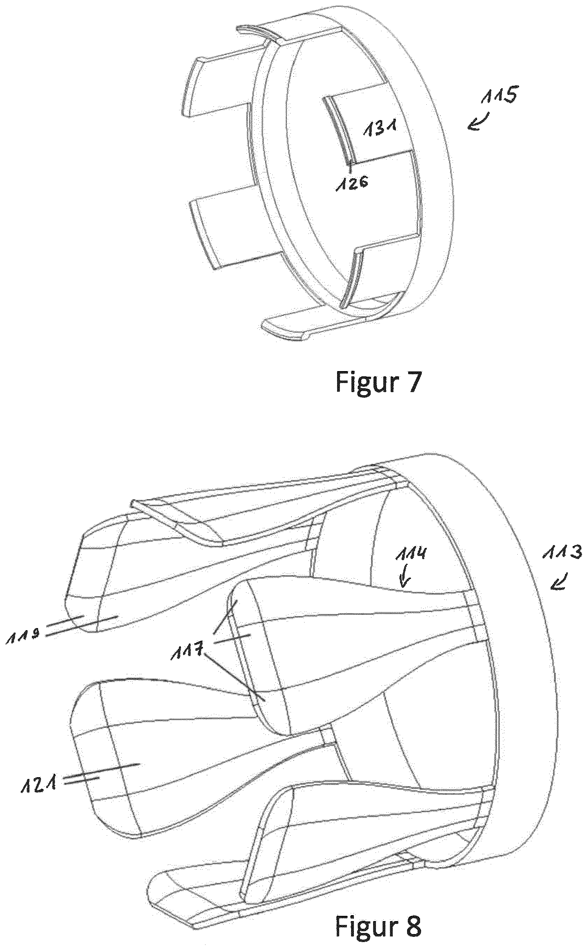

Figur 7 zeigt ein erfindungsgemäßes Schleppelement mit mehreren Federlaschen 131. An den vorderen Enden der Federlaschen 131 ist die Nut 126 ausgebildet. Die Anzahl und die Breite der Federlaschen 131 ist in Abhängigkeit der Steifigkeit bzw. der Ausrastkraft des Schleppelements 115 zu wählen.

Figur 8 zeigt ein erfindungsgemäßes Halteelement, welches als Federkorb 113 ausgebildet ist. Der Federkorb 113 umfasst mehrere Laschen 114, die an einem Ring angeformt sind.

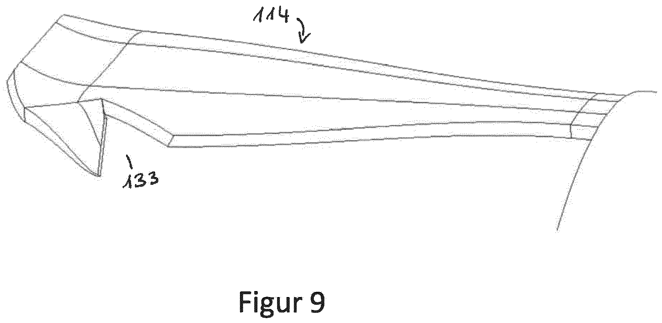

Figur 9 zeigt eine weitere Ausführungsform eines erfindungsgemäßen Federkorbs 113 dessen Federlaschen in den äußeren Bereichen 119 Rasthaken 133 aufweisen. Die Rasthaken 133 bilden Rastmittel, so dass der Federkorb 113 mit einem weiteren Bauelement verrasten kann. Es kann vorgesehen sein, dass die Rasthaken mit einem Teil des Gegenverbinders 20 oder mit einem anderen Bauelement verrasten.

Ein Rasthaken 133 lässt sich fertigen, in dem die Federlasche 114 in dem äußeren Bereich 119 eingeschnitten wird und der Einschnitt derart gebogen wird, dass ein Rasthaken 133 entsteht.

### Bezugszeichenliste

- 100: elektrischer Verbinder
- 101: Innenleiter
- 103: Isolierteil
- 105: Außenleiter
- 107: Gehäuse
- 110: Verbindungsmechanismus
- 111: Hülse
- 113: Federkorb
- 114: Federlasche
- 115: Schleppelement
- 117: vorderer Bereich
- 119: äußerer Bereich
- 121: mittiger Bereich
- 123: Rastmittel, Anschlag
- 125: Rastmittel, Nut
- 126: Rastmittel, Rastnase
- 131: Federlasche
- 133: Rasthaken

## Patentansprüche

1. Verbinder (100), insbesondere Steckverbinder, zum lösbaren Verbinden zweier Leitungen entlang einer Verbinderachse mit
- einer Leitung,
- einem Verbindungsmechanismus (110), welcher eine Hülse (111) und ein Schleppelement (115), wobei die Hülse und das Schleppelement ein Rastmittel aufweisen, derart dass die Hülse mit dem Schleppelement zwischen der ersten und der zweiten Position verrastet ist und die Verrastung in der zweiten Position entrastet ist, aufweist, und
ein Halteelement (113) zum Halten eines zu verbindenden Gegenverbinders (20), welches als Feder mit einem Federkorb (113) mit Federlaschen (114) ausgebildet ist, wobei die Feder in radialer Richtung verformbar ist,
wobei die Federlaschen des Federkorbs in radialer Richtung derart gekrümmt sind, dass die Federlaschen das Schleppelement an einem äußeren Bereich (119) der Federlaschen berühren und einen Gegenverbinder in einem mittigen Bereich (121) der Federlaschen berühren,
wobei die Hülse über dem Schleppelement, dem Halteelement und über der Leitung verschiebbar ist,
wobei das Schleppelement und die Hülse jeweils zwischen einer ersten Position und einer zweiten Position entlang der Verbinderachse verschiebbar sind und die Hülse eingerichtet ist, das Schleppelement mittels einer axialen Verschiebung der Hülse zwischen der ersten und der zweiten Position zu verschieben, um den Verbinder mit einem Gegenverbinder zu verbinden bzw. zu lösen.

2. Verbinder nach Anspruch 1, wobei die Leitungen als elektrische Leitungen, insbesondere als Kabel, oder als Rohrleitungen, insbesondere als Fluidleitungen, ausgebildet sind.

3. Verbinder nach einem der vorstehenden Ansprüche, wobei die Hülse, das Halteelement und/oder das Schleppelement aus elektrisch leitendem Material gefertigt sind.

4. Verbinder nach einem der vorstehenden Ansprüche, wobei die Hülse zwischen der ersten Position, der zweiten Position und einer dritten Position, die einen Anschlag für die Hülse bildet, beweglich ist, wobei sich die zweite Position zwischen der ersten Position und der dritten Position befindet und die zweite Position eine Endposition für das Schleppelement bildet.

5. Verbinder nach Anspruch 4, wobei die Hülse und/oder das Schleppelement ein Rastmittel (123, 125, 126) aufweisen, derart dass die Hülse mit dem Schleppelement zwischen der ersten und der zweiten Position verrastet ist und die Verrastung in der zweiten Position entrastet ist.

6. Verbinder nach Anspruch 5, wobei die Kraft, mit der das Schleppelement an der Hülse verrastet ist, über die Position eines Rastmittels (123) der Hülse einstellbar ist.

7. Verbinder nach Anspruch 5 oder 6, wobei sich die zweite Position, in der die Verrastung zwischen dem Schleppelement und der Hülse entrastet ist, in Abhängigkeit von einer Kraft, die von der Hülse auf das Schleppelement übertragen wird, bestimmt.

8. Verbinder nach Anspruch 7, wobei die zweite Position zwischen der ersten Position und der dritten Position variiert.

9. Verbinder nach einem der vorstehenden Ansprüche, wobei der Verbindungsmechanismus eingerichtet ist, den Verbinder mit einem Gegenverbinder zu verklemmen und/oder zu verrasten.

10. Verbinder nach Anspruch 9, wobei die Feder ein Rastmittel (133) aufweist, welches eingerichtet ist, mit dem Gegenverbinder zu verrasten.

11. Verbinder nach Anspruch 10, wobei das Rastmittel als hakenförmige Ausnehmung (133) der Federlasche ausgebildet ist.

12. Verbinder nach Anspruch 1, wobei sich die Federlaschen in einem interfaceseitigen Bereich (117) radial aufweiten.

## Claims

1. A connector (100), in particular a plug connector, for detachably connecting two lines along a connector axis having
- a line,
- a connecting mechanism (110), which has a sleeve (111) and a dragging element (115), wherein the sleeve and the dragging element have a latching means, in such a manner that the sleeve is latched with the dragging element between the first and the second position and the latching is unlatched in the second position, and
a holding element (113) for holding a mating connector (20) to be connected, which is designed as a spring with a spring cage (113) with spring shackles (114), wherein the spring can be deformed in the radial direction,
wherein the spring shackles of the spring cage are curved in the radial direction in such a manner that the spring shackles contact the dragging element on an external region (119) of the spring shackles and contact a mating connector in a central region (121) of the spring shackles,
wherein the sleeve is displaceable over the dragging element, the holding element and over the line,
wherein the dragging element and the sleeve in each case can be displaced between a first position and a second position along the connector axis and the sleeve is set up to move by means of an axial displacement of the sleeve between the first and the second position, in order to connect the connector to a mating connector or to release it from the latter.

2. A connector according to Claim 1, wherein the lines are designed as electrical lines in particular as cables, or as pipelines, in particular as fluid lines.

3. A connector according to any one of the preceding claims, wherein the sleeve, the holding element and/or the dragging element are produced from electrically conductive material.

4. A connector according to any one of the preceding claims, wherein the sleeve is movable between the first position, the second positon and a third position, which forms a stop for the sleeve, wherein the second position is located between the first position and the third position and the second position forms an end position for the dragging element.

5. A connector according to Claim 4, wherein the sleeve and/or the dragging element have a latching means (123, 125, 126), in such a manner that the sleeve is latched to the dragging element between the first and the second position and the latching is unlatched in the second position.

6. A connector according to Claim 5, wherein the force, with which the dragging element is latched to the sleeve, can be adjusted via the position of a latching means (123) of the sleeve.

7. A connector according to Claim 5 or 6, wherein the second position, in which the latching between the dragging element and the sleeve is unlatched, is determined depending on a force, which is transmitted from the sleeve to the dragging element.

8. A connector according to Claim 7, wherein the second position between the first position and the third position varies.

9. A connector according to any one of the preceding claims, wherein the connecting mechanism is arranged to clamp and/or to latch the connector to a mating connector.

10. A connector according to Claim 9, wherein the spring has a latching means (133), which is arranged to latch to the mating connector.

11. A connector according to Claim 10, wherein the latching means is designed as a hook-shaped recess (133) of the spring shackle.

12. A connector according to Claim 1, wherein the spring shackles expand radially in an interface-side region (117).

## Revendications

1. Connecteur (100), en particulier connecteur à fiche, destiné à la connexion détachable de deux lignes le long d'un axe de conducteur, avec
- une ligne,
- un mécanisme de connexion (110), lequel comporte une cosse (111) et un élément d'accompagnement (115), la cosse et l'élément d'accompagnement comportant un moyen d'encliquetage de telle sorte que la cosse avec l'élément d'accompagnement est encliquetée entre la première et la deuxième position, et l'encliquetage étant libéré dans la deuxième position, et
un élément de retenue (113), destiné à la retenue d'un contre-connecteur (20) à connecter, qui est constitué en tant que ressort avec une cage de ressort (113) avec des pattes élastiques (114), le ressort étant déformable dans la direction radiale,
les pattes élastiques de la cage de ressort étant courbées dans la direction radiale de telle sorte que les pattes élastiques touchent l'élément d'accompagnement au niveau d'une zone extérieure (119) des pattes élastiques et touchent un contre-connecteur dans une zone centrale (121) des pattes élastiques,
la cosse pouvant être déplacée sur l'élément d'accompagnement, l'élément de retenue et sur la ligne,
l'élément d'accompagnement et la cosse pouvant être déplacés respectivement entre une première position et une deuxième position le long de l'axe de connecteur, et la cosse étant agencée pour déplacer l'élément d'accompagnement au moyen d'un déplacement axial de la cosse entre la première et la deuxième position pour connecter ou respectivement libérer le connecteur à un ou du contre-connecteur.

2. Connecteur selon la revendication 1, les lignes étant constituées en tant que lignes électriques, en particulier en tant que câbles, ou en tant que conduites tubulaires, en particulier en tant que conduites de fluide.

3. Connecteur selon l'une des revendications précédentes, la cosse, l'élément de retenue et/ou l'élément d'accompagnement étant fabriqués en matériau électriquement conducteur.

4. Connecteur selon l'une des revendications précédentes, la cosse étant mobile entre la première position, la deuxième position et une troisième position qui forme une butée pour la cosse, la deuxième position se trouvant entre la première position et la troisième position, et la deuxième position formant une position extrême pour l'élément d'accompagnement.

5. Connecteur selon la revendication 4, la cosse et/ou l'élément d'accompagnement comportant un moyen d'encliquetage (123, 125, 126) de telle sorte que la cosse avec l'élément d'accompagnement est encliquetée entre la première et la deuxième position, et que l'encliquetage est libéré dans la deuxième position.

6. Connecteur selon la revendication 5, la force avec laquelle l'élément d'accompagnement est encliqueté sur la cosse étant réglable par le biais de la position d'un moyen d'encliquetage (123) de la cosse.

7. Connecteur selon la revendication 5 ou 6, la deuxième position dans laquelle l'encliquetage est encliqueté entre l'élément d'accompagnement et la cosse se déterminant en fonction d'une force qui est transmise de la cosse vers l'élément d'accompagnement.

8. Connecteur selon la revendication 7, la deuxième position variant entre la première position et la troisième position.

9. Connecteur selon l'une des revendications précédentes, le mécanisme de connexion étant agencé pour coincer et/ou pour encliqueter le connecteur avec un contre-connecteur.

10. Connecteur selon la revendication 9, le ressort comportant un moyen d'encliquetage (133) qui est agencé pour s'encliqueter avec le contre-connecteur.

11. Connecteur selon la revendication 10, le moyen d'encliquetage étant constitué en tant que creux (133) en forme de crochet de la patte élastique.

12. Connecteur selon la revendication 1, les pattes élastiques s'évasant radialement dans une zone (117) côté interface.
